# EUROPEAN PATENT APPLICATION

(11) **EP 4 361 222 A1**
(43) Date of publication of application: **01.05.2024**
(21) Application number: 23198891.6
(22) Date of filing: 21.09.2023
(51) Int. Cl.: C09D 5/00, C08K 3/04, C09D 7/61, C09D 183/04, C09D 183/08

(54) **ABRASION RESISTANT COATING COMPOSITION FOR WINDSHIELD WIPER BLADE APPLICATION**

(30) Priority: 28.10.2022 US 202263420104 P; 16.08.2023 US 202318234445
(71) Applicant: Illinois Tool Works Inc., Glenview, IL 60025 (US)
(72) Inventor: FANG, Jiafu, Glenview, 60025 (US)
(74) Representative: HGF

(57) **Abstract**

A coating composition for imparting water repellency from an elastomeric hydrophobic applicator of a wiper blade squeegee to a windshield is provided that includes a quaternary ammonium silane salt, a quaternary silicone polymer, a particulate dispersion; and a solvent. A wiper blade is also provided that includes a hydrophobic elastomeric wiper blade squeegee adapted to couple to a windshield wiper arm and to engage a glass windshield. A coating formed by the evaporation of the solvent from the aforementioned composition is present on the squeegee. A process of activating a windshield includes windshield being contacted by the wiper blade squeegee coated with the evaporated coating created from the aforementioned composition. The windshield is wiped under wet, dry, or a combination of wet and dry conditions with the wiper blade to impart a hydrophobicity of more than 60 degrees of water contact angle to activate the windshield.

## Description

### RELATED APPLICATIONS

This application is a non-provisional application that claims priority benefit of US Provisional Application Serial Number 63/420,104 filed 28 October 2022; the contents of which are hereby incorporated by reference.

### FIELD OF THE INVENTION

The present invention in general relates to a composition for rendering a windshield surface hydrophobic and a process for the use thereof and in particular, to such a composition amenable to application to a windshield wiper blade as an applicator that is able to maintain the desired hydrophobicity to glass for an extended period of time relative to conventional compositions.

### BACKGROUND OF THE INVENTION

The nucleation of water droplets on a windshield poses an ongoing problem for viewing and vehicle operation under high humidity conditions. The operation of automobiles, spacecraft, watercraft, and aircraft are all compromised by poor visibility associated with humidity condensation on a viewing substrate of such vehicles and craft.

A wiper blade squeegee moving across a windshield leaves a thin film of water that partially impairs vision and promotes adhesion of additional liquid water or snow to the windshield. Additionally, as a wiper blade squeegee undergoes degradation through exposure to the environment, the uniformity of wiper blade squeegee contact with the windshield is degraded. These problems are compounded by debris that commonly adheres to the windshield and create regions in which the wiper blade squeegee is gapped from the windshield surface leading to vision-obscuring streaks and water droplets.

To address limitations of windshield cleaning through mechanical squeegee action, hydrophobic glass treatment solutions have been applied to vehicle windshields to improve clarity. It has been observed that typical hydrophobic glass treatments only last for a few months on an automotive windshield surface. However, appropriately formulated polysiloxane fluid-based water repellent (WR) coating or treatment for automotive windshield surfaces resist the wiper blade squeegee abrasion if the wiper blade squeegee is composed of silicone rubber. The contact angle (CA) of water on windshield glass so coated remains above ninety degrees for more than 100,000 wiper blade abrasion cycles when the WR coating is applied to a silicone based wiper blade. However, when the WR coating is applied to a non-silicone blade, the contact angle falls below sixty degrees at approximately 20,000 wiper blade abrasion cycles, which is considered the minimum effective contact angle demonstrating a correlation between the WR coating and the wiper blade squeegee composition. Unfortunately, if a conventional polysiloxane fluid-based WR coating is pre-applied onto a silicone rubber wiper blade squeegee, the water repelling component in the WR coating overtime is diminished.

US patent 9,637,670 and 9,540,552 provide a solution to the application difficulty of water repellent treatment on the automotive windshield by applying a non-curing, water repellent coating on the wipe blade squeegee lip which in turn transfers the water repellent to the windshield surface by the wiping action of the wiper blade. While the water repellent coating taught by these patents is effective, the water-repelling power of the affected windshield surface offers a rather limited durability against rubber abrasion.

US Patent Application Publication Number US20220195204A1 discloses water repellent coating for wiper blades, particularly for those that use silicone rubber. This water repellent coating possesses a unique property that prevents the water-repelling actives from being absorbed into the rubber interior body over time that preserves the effectiveness of the coating on the squeegee before the wiper blade contacts a windshield. Compared the polysiloxane-based coating, this coating extends the coating hydrophobicity imparted to the glass windshield surface against the abrasion of the wiper blade. Yet, this durability is finite and principally degraded by the friction between the coated wiper blade squeegee and the windshield surface, as manifested by the occasional chattering/skipping of the wiper blade while in operation, particularly under dry or semi-dry condition.

Thus, there exists a need for a wiper blade coating that has a longer-lasting shelf life after application to the wiper blade squeegee and more abrasion resistance of the conveyed water repellency on the affected glass surface, compared to conventional coatings as to allow the coated wiper blade squeegee to impart a hydrophobic film to the contacted areas of the windshield more efficiently and retain the glass hydrophobicity.

### SUMMARY OF THE INVENTION

A coating composition for imparting water repellency from an elastomeric hydrophobic applicator of a wiper blade squeegee to a windshield is provided that includes a quaternary ammonium silane salt, a quaternary silicone polymer, a particulate dispersion; and a solvent.

A wiper blade is also provided that includes a hydrophobic elastomeric wiper blade squeegee adapted to couple to a windshield wiper arm and to engage a glass windshield. A coating formed by the evaporation of the solvent from the aforementioned composition is present on the squeegee.

A process of activating a windshield includes windshield being contacted by the wiper blade squeegee coated with the evaporated coating created from the aforementioned composition. The windshield is wiped under wet, dry, or a combination of wet and dry conditions with the wiper blade to impart a hydrophobicity of more than 60 degrees of water contact angle to activate the windshield.

### BRIEF DESCRIPTION OF THE DRAWINGS

The present invention is further detailed with respect to the following drawings. These figures are not intended to limit the scope of the present invention but rather illustrate certain attributes thereof.

The figures is a plot of water contact angle in degrees as a function of wiper blade wipe cycles on automotive windshield glass for an invention composition with a silicone wiper blade relative to conventional compositions and non-silicone wiper blades.

### DETAILED DESCRIPTION OF THE PREFERRED EMBODIMENTS

The present invention has utility as a water repellent coating composition amenable to being imparted to a windshield from a wiper blade squeegee. The composition having a surprisingly long-lasting water repellency once the coating is transferred from the coated wiper blade squeegee to the windshield surface through the wiping action. While the benefit of the coating composition of this invention is applicable to any type of rubber squeegee, it is particularly effective for the wiper blade whose squeegee is made of silicone rubber. A silicone wiper blade squeegee coated with this inventive coating composition imparts water repellency to the windshield surface and lasts at least 10 times longer than a conventional polysiloxane-based water repellent coating on non-silicone rubbers. In some inventive embodiments, the hydrophobicity lasts up to 100 times longer than a conventional polysiloxane-based water repellent coating on non-silicone rubbers. Lab tests under the conditions prescribed in the SAE J903 demonstrates that the hydrophobicity is retained for more than 1,000,000 wipe cycles. In some inventive embodiments, the hydrophobicity lasts longer than the useful operational lifespan of a typical wiper blade.

Unlike the conventional polysiloxane-based water repellent coating, the inventive coating composition imparts hydrophobicity to the windshield under a method step of wet condition. This is in contrast to the prior art polysiloxane-based coatings that typically requires dry conditions for wiper blade application to impart the hydrophobicity to the windshield. Transparency of the windshield is maintained.

An inventive coating also has the attribute of balancing the friction of the coated squeegee against the glass windshield surface, as demonstrated by the minimal chattering/skipping of the wiper blade squeegee during motion thereover. While the present invention is further detailed with respect to application to a glass substrate such as a vehicle window, if is appreciated that an inventive composition is readily applied to numerous other substrates to impart hydrophobic films thereto such as that of a building window or those of any of the aforementioned craft.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

Unless otherwise defined, all technical and scientific terms used herein have the same meaning as commonly understood by one of ordinary skill in the art to which this invention belongs. The terminology used in the description of the invention herein is for the purpose of describing particular embodiments only and is not intended to be limiting of the invention.

Unless indicated otherwise, explicitly or by context, the following terms are used herein as set forth below.

As used in the description of the invention and the appended claims, the singular forms "a," "an" and "the" are intended to include the plural forms as well, unless the context clearly indicates otherwise.

Also as used herein, "and/or" refers to and encompasses any and all possible combinations of one or more of the associated listed items, as well as the lack of combinations when interpreted in the alternative ("or").

As used herein, a wipe cycle is defined as one upward swing plus the returning downward swing of the wiper blade.

As used herein, hydrophobicity is used synonymously with water repellency as measured by ASTM C813.

As used herein, graphene is defined as a two-dimensional material constructed by close-packed carbon atoms including a single-layer graphene, double-layer graphene, few-layer graphene, and graphene nanoplatelets.

As used herein double-layer graphene is defined as a stack graphene of two layers, few-layer graphene is defined as a stack of graphene of 3-10 layers, graphene nanoplatelet is defined as a stack of graphene of more than 10 layers. The graphene materials can be made by chemical or mechanical exfoliation of graphite, chemical vapor deposition, physical vapor deposition, microwave plasma, sonication/cavitation in solvent, organic synthesis, and epitaxy growth on a substrate.

As used herein, graphene oxide is defined as graphene with various oxygen-containing functionalities such as epoxide, carbonyl, carboxyl, and hydroxyl groups and a total oxygen content of 10-60 weight percent, typically around 20-50 weight percent.

As used herein, reduced graphene oxide is defined as graphene oxide that has been chemically or thermally reduced with a total oxygen content of typically in the range of 10-50 precent depending on the extent of the reduction.

As used herein, a nanoplatelet is defined as having planar dimensional in orthogonal direction of each independently between 2 and 20 nanometers.

While the coating composition of the present invention is largely detailed hereafter with respect to a wiper blade squeegee formed of silicone, it is appreciated that the inventive coating also provides excellent performance on various non-silicone rubber materials commonly used in the wiper blade industry. These other materials including but not limited to, natural rubber, synthetic rubber such as CR rubber (chloroprene rubber), EPDM (ethylene propylene diene terpolymer) rubber, mixtures of natural and synthetic rubbers, silicone rubber, and mixtures of silicone rubber and non-silicone rubber.

It is further appreciated that while the coating composition of the present invention is largely detailed with respect to windshields, it is appreciated that other suitable target surfaces of usage for the present invention illustratively include buffing pads, buffing clothes, chamois, manual squeegees, vehicle rear windows, aircraft exterior surfaces, and other exterior surfaces where water repellency is desired.

As used herein, the terms "wiper blade" and "wiper blade squeegee" as used herein are intended to encompass these aforementioned applicators as well.

As used herein, the term "wipe cycle" is defined as one upward swing and the returning downward swing of the wiper blade in contact with a substrate to be coating. A vehicle or craft windshield being an exemplary substate.

An inventive coating composition includes a film-forming, quaternary ammonium silane compound having the formulas:

[(RO)₃₋ₐSi-R²-N(R¹)(R¹)(R³)] X⁻ (I),

or

(HO)₂-Si(R⁴)-O-(R⁴)Si-(OH)₂ (II)

where R in each occurrence is independently C₁-C₄ alkyl, R⁴, or H; a is an integer value of 0, 1, or 2, inclusive; R¹ and R² in each occurrence are independently C₁-C₈ alkyl or alkenyl groups; R³ is a C₁-C₂₂ alkyl group; and X represents an anion, and includes F⁻, Cl⁻. Br⁻, I⁻, divalent and trivalent anions with the proviso that a salt is formed with the quaternary ammonium cation; and R⁴ in each occurrence is N(R¹)(R¹)(R³)] X⁻. It is appreciated that any alkyl or alkenyl moieties present in formula (I) can be linear or branched. It is further appreciated that any alkyl group having of at least C3 can further include a pendant group that serves to modify the solubility and filming forming properties. Pendant groups operative herein illustratively include -OH, -SO₄⁻², or -SO₃⁻.

Exemplary quaternary ammonium silanes operative herein illustratively include: (CH₃O)₃Si(CH₂)₃N+(CH₃)₂C₁₈H₃₇Cl- , (CH3CH2O)3Si(CH2)3N+(CH3)2C18H37Cl-, (CH3O)3Si(CH2)3N+(CH3)2C18H37Br-, (CH3O)3Si(CH2)3N+(C10H21)2CH3Cl-(CH3O)3Si(CH2)3N+(CH3)2C14H29Cl-, (CH3O)3Si(CH2)3N+(CH3)2C14H29Br- , (CH3O)3Si(CH2)3N+(CH3)2C16H23Cl-, and combinations thereof.

The film-forming, quaternary ammonium silane salt is present in some inventive embodiments from 5 to 55 total weight percent, in other inventive embodiments, the salt is present from 20 to 40 total weight percent.

An inventive composition also includes a quaternary silicone polymer having the general formula:

{(R¹)(R²)(R³)N⁺CH₂CH(OH)CH₂O(CH₂)₃[Si(R⁴)(R⁵)-O-]ₙ-Si(R⁶)(R⁷)-(CH₂)₃-O-CH₂CH(OH)CH₂N⁺(R⁸)(R⁹)(R¹⁰)}(X⁻)₂ (III)

where R¹ and R¹⁰ are in each occurrence independently selected from H, C₁-C₂₄ alkyl, C₃-C₂₄ in both linear and branched forms, and C₅-C₈ cyclic ring systems; R²-R⁹ are in each occurrence independently selected from H, C₁-C₂₄ alkyl, C₃-C₂₄ in both linear and branched forms, and Cs-C₈ cyclic ring systems; n is an integer from 50 to 200; and X⁻ is halide, C₁-C₂₄ carboxylate, C₁-C₂₄ sulphonate Suitable quaternary silicone polymers of this class are described in US5302322, col. 2, line 59-col. 3, line 55.

The quaternary silicone is present in some inventive embodiments from 5 to 55 total weight percent, in other inventive embodiments, the quaternary silicone is present from 20 to 40 total weight percent.

An inventive coating composition also includes a particulate. The particulate is used either as is (solid powder) or dispersed in a non-aqueous solution typically present from 0.5 to 20 weight percent of the non-aqueous dispersion. The particulate functions in different ways, as (1) color-masking agent, (2) thickener, (3) lubricant to lubricate the glass windshield, and (4) other beneficiary roles. In some inventive embodiments, the particulate is graphene or graphene oxide that complements silicones in the film coating to inhibit dirt and debris adhesion and hardens the resulting film coating against abrasion thereby significantly improving coating longevity

Graphene-type materials operative in the present invention include single-layer graphene, double-layer graphene, few-layer graphene, graphene oxide (GO), reduced graphene oxide (rGO), exfoliated graphene nanoplatelets, and ultra-thin graphite.

In inventive embodiments of the hard surface treatment composition, the graphene can be single layer graphene, few-layer graphene, or multi-layer graphene nanoplatelet, or a combination thereof. Graphene nanoplatelet is low cost and has an easy-handling nature as compared to single layer graphene. The thickness and size of graphene or graphene nanoplatelets can be adjusted to meet the processing requirements, coating quality, and coating performance needs. In addition to graphene or graphene nanoplatelet, other additives may be added in the formulation to provide different properties and functionalities. Such additives include but are not limited to graphite, carbon black, carbon fibers, carbon nanotubes, metallic or ceramic flakes or particles. Other particulates suitable to provide the above stated function illustratively includes graphite, turbostratic carbon, boron nitride, and combinations thereof. The particulate dispersion is present in some inventive embodiments from 2 to 20 total weight percent, in other inventive embodiments, the particulate dispersion is present from 5 to 18 total weight percent.

A solvent or a combination of solvents capable of forming a solution with the quaternary ammonium chloride silane salt and quaternary silicone is also provided. The solvents operative herein illustratively include polar or non-polar or mixture of polar or non-polar solvents suitable for dissolution of the quaternary ammonium chloride silane salt and quaternary silicones that illustratively include methylethylketone, C₁-C₈ alkyl lactates, C₁-C₈ alkyl acetates, C₁-C₈ alcohols, glycols, glymes, polyalkyl glycols, ethers, hydrocarbons with boiling points from 80 °C to 250 °C, or low molecular weight polysiloxanes with viscosity no more than 10 centistokes, as well as combinations thereof alone. It is appreciated that the term "alkyl" as used herein in the context of solvents intended to include linear, branched, and cyclic forms thereof. In certain inventive embodiments, the solvent is the alcohol, of which isopropanol is exemplary. The nature of the solvent as operative herein is largely limited only to the ability to dissolve or disperse the quaternary ammonium chloride silane salt and quaternary silicone components. The solvent makes up the remainder of the composition regardless of the presence of optional additives.

While it should be appreciated that there is virtually no limit as to the nature of a substrate to which an inventive composition is applied to as to form a hydrophobic film besides windshield glass, with the proviso that the substrate is not dissolved or otherwise damaged through exposure to an inventive composition, exemplary substrates that are exposed to environmental conditions in which water droplet nucleation can occur on the substrate and having optical transmission attributes in their usage illustratively include optically transparent or translucent substrates formed of polystyrene, polycarbonate, polymethyl methacrylate, quartz glasses, silicate glasses, and ceramics.

Typical and preferred compositions according to the present inventions are provided in Table 1.

**Table 1. Inventive Composition (amounts in total weight percent unless otherwise noted).**

| Ingredient | Typical | Preferred |
|---|---|---|
| Quarternary Ammonium Chloride silane | 5-55 | 20-40 (30) |
| Quaternary silicone | 5-55 | 20-40 (30) |
| Particulate dispersion (e.g. 5% bv wt particulate) | 2-20 | 5-18 |
| Polar solvent | to 100% | to 100% |

It is appreciated that an inventive coating on an applicator, such as a wiper blade, represents a dried version of the composition that has lost most if not all of the solvent and in some instances mineral spirits through volatilization so as to be composed of the salt, particulate, additives and in some instances residual solvent. The resulting coating is then imparted to the substrate, such as a vehicle or craft wind shield. A typical coating thickness is 3.0 mg to 20 mg per inch of wiper blade squeegee length when applied to both opposing wipers lips of a wiper blade as an exemplary applicator.

A process for activating a windshield with a wiper blade squeegee as an applicator according to certain embodiments of the present invention is achieved by wiping the windshield under wet, dry, or a combination of wet and dry conditions to a water repellency of more than 60 degrees of water contact angle no more than 300 wipe cycles. In still other embodiments, this degree of water repellency is achieved while maintaining a wipe quality that is equal to or greater of that for an uncoated wipe blade otherwise identical to the wiper blade while the water repellency on the wiped windshield surface remains. Wipe quality is typically graded from a scale of 1 to 10, as defined, for example, by Akron Rubber Development Laboratory (ARDL), Inc.

The shelf-life of the coating on the wiper blade squeegee conditioned at 50 °C is no less than 45 days or no less than one year if conditioned at the ambient temperature; that is, the aged coated blade is able to convey water repellency to the wiped windshield surface after no more than 300 wipe cycles under wet, dry, or combination of wet and dry conditions and the resulting water contact angle on the wiped glass surface is no less than 60 degrees.

The present invention is further detailed with respect to the following non-limiting examples that are provided to further illustrate the preparation of specific inventive compositions and certain attributes associated with the resulting films on substrates.

### EXAMPLES

### Example 1

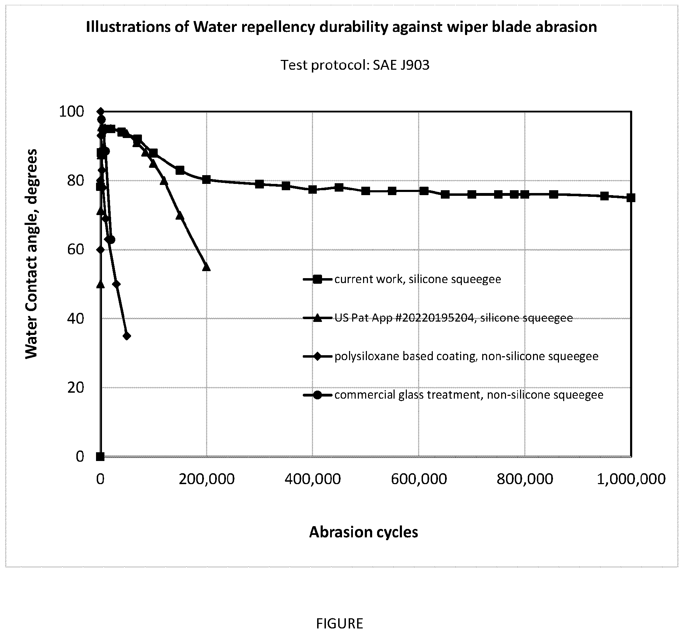

A coating composition of 30 total weight percent of a quaternary ammonium chloride silane such as 3-trimethoxsilylpropyldimethyloctadecyl ammonium chloride, 30 total weight percent quaternary silicone such as dimethicone PG-diethylmonium chloride, 10 total weight percent of a 5 percent by weight graphene nanoplatelets dispersion (flake diameter 1-3 µm, thickness 3-5 nm) in N-Methyl-2-pyrrolidone(NMP), and 30 total weight percent dipropylene glycol n-butyl ether, is applied to silicone rubber squeegees that are then stored at either 50°C or at room temperature for various periods of time before being evaluated for ability to transfer the water repellant (WR) property. A pair of wiper blades with silicone squeegee coated with this water repellent coating derived from the dried composition are tested on a 2010 Toyota Camry. The windshield surface being under wet condition to start and quickly achieved great water repellency. The hydrophobicity of the treated glass surface is gauged by the water contact angle according to ASTM C813 while the wiper blade test follows the SAE J903 protocol. In this example, water contact angle data were collected from 9 spots fairly evenly distributed over the wiped area for each test wiper blade and the averaged value was plotted against wipe cycles, as shown in Figure 1. It is seen that the contact angle never dropped below 60 degrees even after 1,000,000 cycles when the test is terminated. A water contact angle above 60 degrees is considered necessary to benefit the vision improvement for the vehicle driver under the raining condition.

### Comparative Example A

A commercial trigger spray bottle of a commercially sold rain repellant is used to treat an untreated 2006 Nissan Altima windshield per the product application instructions. A non-silicone rubber-based wiper blade of 26-inch length is used to conduct the durability test executed following the SAE J903 protocol as detailed in Example 1. The averaged contact angle is plotted against wipe cycles, as shown in the Figure in which it is noted that the contact angle dropped below 60 degrees when the wiper blade passed ~ 20,000 cycles.

### Comparative Example B

A commercial 26-inch wiper blade is used on the driver side of a 2003 Honda Accord for the abrasion durability test. This blade is manufactured with the water repellent coating disclosed in the US Patents 9,637,670 and 9,540,552; which is polysiloxane-based. In order to activate the water repellency on the windshield surface quickly (about 5 minutes), the wiper blade is operated under dry condition for the first few minutes, then under the condition described in the SAE J903. It is noted that the contact angle dropped below 60 degrees when the wiper blade passed ~ 20,000 cycles, as shown in the Figure.

### Comparative Example C

A pair of wiper blades with silicone squeegee coated with the novel water repellent coating disclosed in the US patent application number 20220195204 are tested on a 2003 Honda Accord per Example 1. The water repellency on the wiped area of the windshield lasts much longer than the Comparative Examples A and B. On average, the water contact angle is above 80 degrees when the wiper blades reached 100,000 wipe cycles, yet dropped below 60 degrees after 200,000 cycles, as shown in the Figure.

Patents and publications mention the specification are indicative of the levels of those skilled in the art to which the invention pertains. These patents and publications are incorporated herein by reference to the same extent as if each individual patent or publication was specifically and individually incorporated herein by reference.

The forgoing description is illustrative of particular embodiments of the invention but is not meant to be a limitation upon the practice thereof. The following claims, including all equivalents thereof are intended to define the scope of the invention.

## Claims

1. A coating composition for imparting water repellency from an elastomeric hydrophobic applicator of a wiper blade squeegee to a windshield comprising:
a quaternary ammonium silane salt;
a quaternary silicone polymer;
a particulate dispersion; and
a solvent

2. The composition of claim 1 wherein said quaternary ammonium silane salt is a chloride.

3. The composition of claim 1 wherein said quaternary ammonium silane is present from 5 to 55 total weight percent.

4. The composition of claim 1 wherein said quaternary silicone polymer is present from 5 to 55 total weight percent.

5. The composition of claim 1 wherein said particulate dispersion comprises graphene, graphene oxide, or a combination thereof, in a non-aqueous solvent system with the net solid content from 0.1 to 10% in the total composition.

6. A wiper blade comprising:
a hydrophobic elastomeric wiper blade squeegee adapted to couple to a windshield wiper arm and to engage a glass windshield; the elastomeric wiper blade squeegee comprises natural rubber (NR), chloroprene rubber (CR), mixture of NR and CR, silicone rubber, or combinations thereof, and
a coating formed by the evaporation of said solvent from the composition of claim 1.

7. The wiper blade of claim 6 wherein said coating is uniformly applied to both sides of a wiper lip of the squeegee with the evaporated coating thickness being from 3.0 mg to 20 mg per inch of wiper blade squeegee length.

8. The wiper blade of claim 6 wherein said coating has a shelf life at 50 °C is no less than 45 days.

9. The wiper blade of claim 6 wherein said coating has a shelf life of at least one year if conditioned at 20 °C.

10. A process of activating a windshield comprising:
contacting the windshield with a wiper blade squeegee coated with a composition according to claim 1; and
wiping the windshield under wet, dry, or a combination of wet and dry conditions to a hydrophobicity of more than 60 degrees of water contact angle to activate the windshield.

11. The process of claim 10 further comprising maintaining the water contact angle of more than 60 degrees for more than 200,000 wiping cycles.

12. The process of claim 11 wherein the water contact angle of more than 60 degrees for is for more than 1,000,000 wiping cycles.
